(19) Europäisches Patentamt
European Patent Office
Office européen des brevets

(11) Veröffentlichungsnummer: **0 376 006**
**A2**

# (12) EUROPÄISCHE PATENTANMELDUNG

(21) Anmeldenummer: **89122428.9**

(22) Anmeldetag: **05.12.89**

(51) Int. Cl.5: **C08L 71/00, C08L 81/06, C08L 67/02, C08L 51/04**

(30) Priorität: **17.12.88 DE 3842552**

(43) Veröffentlichungstag der Anmeldung:
**04.07.90 Patentblatt 90/27**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Eckel, Thomas Dr.**
**Gneisenaustrasse 15a**
**D-4047 Dormagen 1(DE)**
Erfinder: **Fuhr, Karl, Dr.**
**Krüllsdyk 55**
**D-4150 Krefeld(DE)**
Erfinder: **Wittmann, Dieter, Dr.**
**Wolfskaul 4**
**D-5000 Köln 80(DE)**
Erfinder: **Müller, Friedemann, Dr.**
**Am Steinacker 5**
**D-4040 Neuss(DE)**
Erfinder: **Ott, Karl-Heinz, Dr.**
**Paul-Klee-Strasse 54**
**D-5090 Leverkusen 1(DE)**

## (54) Schlagzähe thermoplastische Formmassen aus aromatischen Polyethersulfonen und Polyalkylenterephthalaten.

(57) Die Erfindung betrifft thermoplastische Formmassen aus aromatischen Polyethersulfonen, Polyalkylenterephthalaten und gepfropften Dien- oder Acrylatkautschuken, ein Verfahren zu ihrer Herstellung durch Mischen der Komponenten bei erhöhter Temperatur und ihre Verwendung zur Herstellung von Formkörpern vornehmlich durch Spritzguß.

EP 0 376 006 A2

## Schlagzähe thermoplastische Formmassen aus aromatischen Polyethersulfonen und Polyalkylenterephthalaten

Die Erfindung betrifft thermoplastische Formmassen aus aromatischen Polyethersulfonen, Polyalkylenterephthalaten und gepfropften Dien- oder Acrylatkautschuken, ein Verfahren zu ihrer Herstellung durch Mischen der Komponenten bei erhöhter Temperatur und ihre Verwendung zur Herstellung von Formkörpern vornehmlich durch Spritzguß.

Aromatische Polyethersulfone sind thermoplastische Materialien mit hohem Erweichungspunkt und beträchtlicher chemischer und thermischer Beständigkeit. Wegen ihrer hohen Glastemperaturen und Schmelzviskositäten sind Polyethersulfone schwer verarbeitbar.

Verbessertes Fließverhalten haben gemäß DE-OS 2 046 963 und EP-A 0 036 959 Mischungen der Polyethersulfone mit Polyalkylenterephthalaten.

EP-A 0 133 907 beschreibt Mischungen aus Polyethersulfonen und Polyalkylenterephthalaten, die als weitere Komponente aromatische Polycarbonate enthalten können. Diese Mischungen zeichnen sich durch verbesserte mechanische Eigenschaften aus.

Gemäß US-PS 4 090 996 können Blends aus Polyalkylenterephthalten und Polyethersulfonen mit Styrol/Butadien/Styrol-Blockcopolymeren schlagzäh gemacht werden.

In US-PS 4 369 136 werden Mischungen aus Polyethersulfonen, Polyalkylenterephthalaten und Polycarbonaten beschrieben. Dabei dienen kleine Polycarbonat-Anteile dazu, die Verträglichkeit und damit mechanische Eigenschaften, besonders die Kerbschlagzähigkeit zu verbessern. Diese Mischungen können mit anderen Schlagzähmodifikatoren und mit Flammschutzmitteln kombiniert werden. Als Schlagzähmodifikatoren werden Pfropfpolymerisate von Vinylaromaten, Acrylaten, ungesättigten Nitrilen und deren Mischungen auf Butadien-oder Acrylatkautschuke genannt. Wenn das Polycarbonat fehlt, ist die Kerbschlagzähigkeit der Mischungen trotz des Schlagzähmodifikators sehr gering.

Es wurde gefunden, daß sich Mischungen aus aromatischen Polyethersulfonen, Polyalkylenterepthalaten und gepfropften Kautschuken zu Formkörpern mit hoher Kerbschlagzähigkeit und Fließnahtfestigkeit verarbeiten lassen, wenn man speziell gepfropfte, teilchenförmige Acrylat- oder Dienkautschuke einsetzt. Die erfindungsgemäßen Pfropfkautschuke besitzen eine spezielle Pfropfhülle, die zum überwiegenden Teil aus Methylmethacrylat und kleineren Anteilen mindestens eines Acrylsäureesters eines primären oder sekundären einwertigen aliphatischen Alkohols oder des tert.-Butanols bestehen.

Dies ist überraschend, da diese Eigenschaftskombination ohne Zugabe von aromatischen Polycarbonaten als Verträglichkeitsvermittler erhalten wird. Die erfindungsgemäßen Pfropfpolymerisate wirken sowohl als Schlagzähmodifikator als auch als Verträglichkeitsvermittler zwischen aromatischem Polyethersulfon und Polyalkylenterephthalat und machen eine Polycarbonat-Zugabe überflüssig.

Gegenstand der vorliegenden Erfindung sind thermoplastische Formmassen aus

A. 5 bis 99 Gew.-Teilen, vorzugsweise 10 bis 95 Gew.-Teilen, besonders bevorzugt 50 bis 90 Gew.-Teilen eines aromatischen Polyethersulfons,

B. 1 bis 90 Gew.-Teilen, vorzugsweise 5 bis 70 Gew.-Teilen, besonders bevorzugt 10 bis 50 Gew.-Teilen eines thermoplastischen Polyalkylenterephthalats und

C. 1 bis 60 Gew.-Teilen, vorzugsweise 2 bis 50 Gew.-Teilen, insbesondere 3 bis 40 Gew.-Teilen eines Pfropfpolymerisates, von

C.1 5 bis 90 Gew.-Teilen, vorzugsweise 10 bis 70 Gew.-Teilen, insbesondere 15 bis 50 Gew.-Teilen einer Mischung aus

C.1.1 20 bis 99 Gew.-Teilen, vorzugsweise 50 bis 97 Gew.-Teilen, insbesondere 70 bis 95 Gew.-Teilen Methylmethacrylat und

C.1.2 1 bis 40 Gew.-Teilen, vorzugsweise 1 bis 20 Gew.-Teilen Acrylsäureester eines primären oder sekundären oder sekundären einwertigen aliphatischen $C_2$-$C_{10}$-Alkohols und gegebenenfalls

C.1.3 0,1 bis 10 Gew.-Teilen, vorzugsweise 0,5 bis 4 Gew.-Teilen Acryl- oder Methacrylsäureester des tert.-Butanols und/oder gegebenenfalls

C.1.4 0,1 bis 30 Gew.-Teilen, vorzugsweise 0,5 bis 20 Gew.-Teilen einer Mischung aus 50 bis 95 Gew.-Teilen Styrol, $\alpha$-Methylstyrol, $C_1$-$C_4$-Alkyl- oder Halogen-kernsubstituiertem Styrol oder Mischungen daraus und 5 bis 50 Gew.-Teilen Acrylnitril, Methacrylnitril, Maleinsäureanhydrid, $C_1$-$C_4$-Alkyl- oder Phenyl-N-substituiertem Maleinimid oder Mischungen daraus, auf

C.2 10 bis 95 Gew.-Teile, vorzugsweise 30 bis 90 Gew.-Teile, insbesondere 50 bis 85 Gew.-Teilen eines vernetzten Dien- oder Acrylatkautschuks, mit einem mittleren Teilchendurchmesser $d_{50}$ von 0,05 bis 1 $\mu$m, vorzugsweise 0,05 bis 0,8 $\mu$m und insbesondere von 0,05 bis 0,6 $\mu$m und einen Gelgehalt von mehr als 50, vorzugsweise mehr als 70, insbesondere 73 bis 98 Gew.-%, bezogen auf das Gewicht von C.2.

A Polyethersulfone

Aromatische Polyethersulfone im Sinne der Erfindung sind bevorzugt lineare, thermoplastische Polyarylenpolyethersulfone, in welchen die Aryleneinheiten über Ether- und Sulfongruppen verbunden sind. Man erhält sie durch Umsetzung eines Alkalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe ($-SO_2-$) enthalten muß. Polyethersulfone sowie ihre Herstellung sind bekannt (vgl. US-PS 3 264 536, GB-PS 1 264 900, EP-A 0 038 028).

Die erfindungsgemäßen Polyethersulfone A enthalten wiederkehrende Einheiten der Formel (I)

$\{O-Z-O-W\}$ (I)

worin

Z den Rest eines zweiwertigen Phenols und

W den Rest der benzoiden Verbindung mit einer inerten, elektronenanziehenden Gruppe bedeutet und wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone A sind Verbindungen der Formel (II)

HO - Z - OH (II)

worin Z einen zweiwertigen, ein- oder mehrkernigen aromatischen Rest mit 6 - 30 C-Atomen bedeutet, und die beiden OH-Gruppen direkt an aromatische C-Atome gebunden sind.

Besonders bevorzugte Diphenole entsprechen der Formel (III)

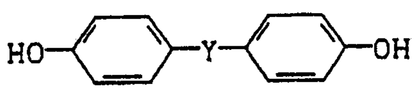

(III)

in der Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-,

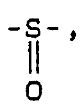 , 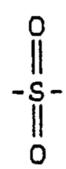 oder 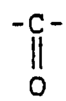 bedeutet,

sowie deren kernalkylierte und kernhalogenierte Derivate.

Beispiele für Diphenole sind:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α′-Bis-(hydroxyphenyl)-diisopropylbenzole
und entsprechende kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4′-Dihydroxybiphenyl, 4,4′-Dihydroxydiphenylsulfid, 4,4′-Dihydroxydiphenylsulfon sowie deren di- und tetrahalogenierte und alkylierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

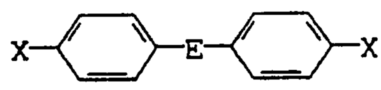

(IV)

Darin bedeuten:

X Halogen (F, Cl, Br, I) und E zweiwertige elektronenanziehende Gruppen, wie Sulfon-, Carbonyl-, Vinyl-, Sulfoxid- oder Azo-Gruppen. Jeder der beiden Benzolringe kann zusätzlich mit einem oder mehreren gesättigten Kohlenwasserstoffresten oder elektronenanziehenden Gruppen substituiert sein.

Bevorzugte aromatische Dihalogenverbindungen (IV) sind 4,4′-Dichlordiphenylsulfon und 4,4′-Dichlorbenzophenon.

Die aromatischen Polyethersulfone können auch verzweigt sein. Geeignete Verzweigungsmittel sind die für die Herstellung von aromatischen Polyestern (DE-OS 2 940 024) und für die Herstellung von aromatischen Polyestercarbonaten (DE-OS 3 007 934) bekannten.

Als Kettenabbrecher bei der Herstellung der aromatischen Polyethersulfone A werden vorzugsweise Phenol, Alkylphenole mit $C_1$-$C_{12}$-Alkylgruppen und halogenierte Phenole sowie Bromide und Chloride von $C_1$-$C_{10}$-Alkanen in Mengen von 0,1 bis 10 Mol-% (im Falle von Phenolen bezogen auf Diphenole, im Falle von Chloriden bezogen auf die aromatischen Dihalogen-Verbindungen) verwendet.

Die reduzierten Viskositäten ($\eta_{red}$) der aromatischen Polyethersulfone A liegen im Bereich von 0,15 bis 1,5 dl/g vorzugsweise von 0,35 bis 0,65 dl/g (gemessen an Lösungen von 20 mg Polyethersulfon A in 10 ml $CHCl_3$ bei 25° C).

B Polyalkylenterephthalate

Polyalkylenterephthalate B im Sinne der Erfindung sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate B lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate B enthalten 80 bis 100, vorzugsweise 90 bis 100 Mol-%, bezogen auf die Dicarbonsäurekomponente, Terephthalsäurereste und 80 bis 100, vorzugsweise 90 bis 100 Mol-%, bezogen auf die Diolkomponente, Ethylenglykol- und/oder Butandiol-1,4-Reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4′-Diphenyldicarbonsäure, Bernstein-, Adipin-, Sebacin-, Azelain- oder Cyclohexadiessigsäure. Neben Ethylenglykol- und/oder Butadiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate B können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate B, die allein aus Terephthalsäure (oder deren reaktionsfähigen Derivaten, z.B. deren Dialkylestern) und Ethandiol und/oder Butandiol-1,4 hergestellt worden sind, und deren Mischungen.

Bevorzugte Polyalkylenterephthalate B sind auch Copolyester, die aus mindestens zwei der obengenannten Diole hergestellt sind; besonders bevorzugte Copolyester sind Poly-(ethylenglykol/butadiol-1,4)-terephthalate. In den Copolyestern können die verschiedenen Diolreste in Form von Blöcken oder statistisch verteilt vorliegen.

Die Polyalkylenterephthalate B besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol

(1:1 Gew.-Tl.) bei 25° C.

C Pfropfpolymerisate

Pfropfpolymerisate C erhält man durch Polymerisation von bis 90 Gew.-Teilen, vorzugsweise von 10 bis 70 Gew.-Teilen, insbesondere 15 bis 50 Gew.-Teilen, eines Gemisches aus Methylmethacrylat und einem Ester eines primären oder sekundären einwertigen aliphatischen $C_2$-$C_{10}$-Alkohols mit Acrylsäure (wie n-Butylacrylat) in Gegenwart von 10 bis 95 Gew.-Teilen, vorzugsweise 30 bis 90 Gew.-Teilen, insbesondere 50 bis 85 Gew.-Teilen eines teilchenförmigen, vernetzten Dien- oder Acrylatkautschuks.

Diese Monomeren bezeichnet man auch als Pfropfmonomere und den Kautschuk als Pfropfgrundlage.

Zusätzlich zu den obengenannten können als Pfropfmonomere noch 0,1 bis 10 Gew.-Teile eines Acryl- oder Methacrylsäureesters des tertiären Butanols und/oder 0,1 bis 30 Gew.-Teile einer Mischung aus Styrol oder α-Methylstyrol und Acrylnitril, Methacrylnitril oder Maleinsäureanhydrid auf die Pfropfgrundlage polymerisiert werden.

Besonders bevorzugte Pfropfmonomere sind Mischungen von Methylmethacrylat und n-Butylacrylat im Gewichtsverhältnis von 85 : 15 bis 98 : 2 sowie Mischungen davon mit tert.-Butylacrylat. Als Pfropfgrundlagen können Dien-oder Acrylatkautschuke eingesetzt werden.

Bevorzugte Dienkautschuke C.2 sind vernetzte Homo-und/oder Copolymerisate von konjugierten $C_4$-$C_6$-Dienen. Bevorzugtes Dien ist Butadien-1,3. Die Diencopolymerisate können neben den Dienresten bis zu 20 Gew.-%, bezogen auf Diencopolymerisate, Reste anderer ethylenisch ungesättigter Monomerer, wie Styrol, Acrylnitril, Ester der Acryl- oder Methacrylsäure mit einwertigen $C_1$-$C_4$-Alkoholen, wie Methylacrylat, Ethylacrylat, Methylmethacrylat und Ethylmethacrylat, einpolymerisiert enthalten. Weitere geeignete Dienkautschuke sind beispielsweise Polyisopren und Polychloropren.

Die Herstellung der Pfropfgrundlage C.2 und der damit hergestellten Pfropfpolymerisate C wird z.B. in "Methoden" der Organischen Chemie" (Houben-Weyl), Band 14/1, Georg Thieme Verlag, Stuttgart 1961, S. 393-406, sowie in Ullmanns Encyclopädie der technischen Chemie, 4. Auflage, Band 19, Verlag Chemie, Weinheim, 1981, S. 279-284, beschrieben.

Bevorzugte Acrylatkautschuke sind Polymerisate von $C_1$-$C_8$-Alkylacrylaten, insbesondere Ethyl-, Butyl-, Ethylhexylacrylat. Diese Polymerisate können bis zu 30 Gew.-%, bezogen auf den Kautschuk, Monomere wie Vinylacetat, Acrylnitril, Styrol, Methylmethacrylat und/oder Vinylether copolymerisiert enthalten. Alkylacrylatkautschuke können auch kleinere Mengen, vorzugsweise bis zu 5 Gew.-%, bezogen auf den Kautschuk, vernetzend wirkender, ethylenisch ungesättiger Monomerer einpolymerisiert enthalten. Solche Vernetzer sind z.B. Alkylendiol-di-acrylate und -methacrylate, Polyesterdi-acrylate und -methacrylate, Divinylbenzol, Trivinylbenzol, Trialkylcyanurat, Allylacrylat, Allylmethacrylat, Butadien und Isopren.

Acrylatkautschuke sind besonders vorteilhaft, wenn sie eine Kern-Mantel-Struktur aufweisen, d.h. einen Kern aus einem anderen Polymerisat enthalten, der von einer Hülle aus vernetztem Alkylacrylatkautschuk umgeben ist.

Als Kern kommen vernetzte Dienkautschuke aus einem oder mehreren konjugierten Dienen wie Polybutadien oder Copolymerisate eines konjugierten Diens mit einem ethylenisch ungesättigten Monomer, wie Styrol und/oder Acrylnitril, oder Copolymerisate von ethylenisch ungesättigten Monomeren untereinander, wie Styrol und Acrylnitril, in Frage.

Bevorzugte Herstellungsverfahren für die Pfropfpolymerisate C sind Emulsions-, Lösungs-, Masse oder Suspensionspolymerisation.

Bei der Herstellung der Pfropfpolymerisate C durch Pfropfcopolymerisation, die üblicherweise in Gegenwart von Radikalstartern, z.B. wasserlöslichen Initiatoren, Emulgatoren oder Komplexbildnern/Pfropfaktivatoren, sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren.

Pfropfpolymerisat C im Sinne der Erfindung ist deshalb das durch Polymerisation von Pfropfmonomeren C.1 in Gegenwart des Kautschuks C.2 erhaltene Produkt.

Die erfindungsgemäßen Formmassen weisen optimale Eigenschaften auf, wenn die Menge an freiem (Co)Polymerisat im Pfropfpolymerisat C 50 Gew.-%, vorzugsweise 30 Gew.-%, insbesondere 20 Gew.-%, bezogen auf C, nicht übersteigt.

Der Staudinger-Index dieser freien (Co)Polymerisate soll weniger als 0,6 dl/g, vorzugsweise weniger als 0,4 dl/g betragen, gemessen in Dimethylformamid bei 25° C.

Der mittlere Teilchendurchmesser $d_{50}$ ist der Durchmesser, oberhalb und unterhalb dessen jeweils 50 Gew.-% der Teilchen liegen. Er kann bestimmt werden mit Hilfe der Ultrazentrifuge (W. Scholtan, H. Lange,

Kolloid, Z. und Z. Polymere 250 1972), 782-796), durch Auszählen der Teilchen auf einer elektronenmikroskopischen Aufnahme (G. Kämpf, H. Schuster, Angew. makromolekulare Chemie, 14, (1970), 111-129) oder durch Lichtstreuungsmessung.

Die Gelgehalte der vernetzten Kautschuke sind größer als 50 %, vorzugsweise größer als 70 %, insbesondere 75 bis 98 Gew.-%, bezogen auf das Gewicht von C.2. Sie werden bestimmt bei 25 °C in Toluol (M. Hoffmann, H. Krömer, R. Kuhn, Polymeranalytik I und II, Georg Thieme Verlag, Stuttgart 1977).

Als Radikalbildner zur Herstellung der Pfropfpolymerisate C können anorganische und organische Peroxide oder Hydroperoxide, z.B. Verbindungen des Typs $R_1OOR_2$ eingesetzt werden ($R_1$ = $R_2$ = Alkyl, Aryl, Acyl, Wasserstoff, oder $R_1$ = Alkyl, Aryl, Acyl, $R_2$ = Wasserstoff). Gesamtzahl der Kohlenstoffatome in den Resten $R_1$ und $R_2$ ist ≦ 30, bevorzugt ≦ 25). Beispiele sind Dibenzoylperoxid, tert.-Butylhydroperoxid, Cumolhydroperoxid, Laurylperoxid, 2,5-Di-tert.-butyl-2,5-dimethylhexylperoxid, Di-tert.-Butylperoxid oder Di-cumylperoxid.

Des weiteren sind anorganische Verbindungen mit einer O-O-Gruppierung, wie Peroxide, Per-Verbindungen von Säuren des Schwefels, z.B. Persulfate, oder auch Perborate als Radikalbildner geeignet. Bevorzugt sind Peroxidisulfate, z.B. $K_2S_2O_8$. Weitere Beispiele sind $(NH_4)_2S_2O_8$, $Na_2S_2O_8$, $Na_2O_2$, $NaBO_3 \cdot 4H_2O$, $Na_2B_4O_8 \cdot 10H_2O$.

Ein ganz besonders bevorzugter Mengenbereich an Peroxid/Hydroperoxid-Verbindungen ist 0,05 bis 0,30 Gew.-%, bezogen auf Monomere.

Die Pfropfpolymerisate C können nach bekannten Verfahren aus dem primären Reaktionsprodukt (z.B. einer wäßrigen Dispersion) isoliert werden, z.B. durch Koagulation der Latices mit Elektrolyten (Salzen, Säuren oder Gemischen davon) und anschließende Reinigung und Trocknung.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden.

Gegenstand der vorliegenden Erfindung ist auch ein Verfahren zur Herstellung von thermoplastischen Formmassen aus den Komponenten A, B und C sowie gegebenenfalls Stabilisatoren, Pigmenten, Entformungsmittel, Flammschutzmittel und/oder Antistatika, das dadurch gekennzeichnet ist, daß man die Bestandteile in bekannter Weise vermischt und bei erhöhten Temperaturen, vorzugsweise bei Temperaturen von 200 bis 350 °C, in üblichen Vorrichtungen, schmelzcompoundiert oder schmelzextrudiert.

Die erfindungsgemäßen Formmassen können für aromatische Polyethersulfone, Polyalkylenterephthalate sowie für Pfropfcopolymerisate bekannte Zusätze, wie Stabilisatoren, Pigmente, Entformungsmittel, Flammschutzmittel und/oder Antistatika, in den üblichen Mengen enthalten.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte, wie Saftpressen, Kaffeemaschinen, Mixer, Mikrowellengeschirr), Abdeckplatten für das Baugewebe, Automobilteile. Sie können außerdem für elektrische Geräte, z.B. für Steckerleisten, Spulenkörper und Leiterplatten, eingesetzt werden.

Formkörper können auch durch Tiefziehen aus vorher hergestellten Platten oder Folien hergestellt werden.

Weiterer Gegenstand der Erfindung ist auch die Verwendung der beschriebenen Formmassen zur Herstellung von Formkörpern.

## Beispiele

Teile sind immer Gew.-Teile.

### Bestandteile

#### A Aromatische Polyethersulfone

1141,7 Teile Bis-2,2-(4-hydroxyphenyl)-propan und 1435,8 Teile Bis-(4-chlor-phenyl)-sulfon werden unter Stickstoff in 4500 Teilen N-Methylpyrrolidon und 970 Teilen Chlorbenzol gelöst und mit 760 Teilen wasserfreiem Kaliumcarbonat versetzt. Das Reaktionsgemisch wird innerhalb von 30 Minuten auf 180 °C erhitzt und dort 5 Stunden gehalten, wobei ein Gemisch aus Wasser und Chlorbenzol abdestilliert. Innerhalb

weiterer 4 Stunden wird das Chlorbenzol abdestilliert. Nach einer Reaktionszeit von 6 Stunden wird das Reaktionsgemisch auf 60 - 70° C abgekühlt, das Polymere in Methanol ausgefällt, mit Wasser gewaschen und im Vakuum getrocknet. Das Produkt besitzt eine reduzierte Viskosität von $\eta_{red}$ = 0,52 dl/g ($CHCl_3$ bei 25° C).

B Polyalkylenterephthalat

Lineares Polyethylenterephthalat mit einer Intrinsic-Viskosität I.V. = 0,85 dl/g, gemessen in Phenol/o-Dichlorbenzol (1:1) bei 25° C, und einer Konzentration von 0,5 g/dl (Melinar B 90 S der Firma ICI).

C Pfropfpolymerisat

Pfropfpolymerisat C, hergestellt durch Emulsionspolymerisation aus 80 Gew.-% vernetztem Polybutadien (Gelgehalt 85 Gew.-%, gemessen in Toluol) und 20 Gew.% Methylmethacrylat und n-Butylacrylat im Verhältnis 9:1 mit einem mittleren Teilchendurchmesser $d_{50}$ = 0,4 µm.

Herstellung und Prüfung der erfindungsgemäßen Formmassen

A, B und C wurden auf einem 1,3-l-Innenkneter bei Temperaturen von 200 bis 280° C gemeinsam aufgeschmolzen und homogenisiert.

Aus den erhaltenen Gemischen (Formmassen) wurden auf einer Spritzgußmaschine Stäbe der Abmessung 80 x 10 x 4 mm³ (Verarbeitungstemperatur: 280° C) herstellt, an denen die Kerbschlagzähigkeit (nach Methode ISO 180) bei 20° C gemessen wurde.

Zur Ermittlung der Fließnahtfestigkeit (an F) wurde die Schlagzähigkeit nach DIN 53 453 (Charpy-Methode) an der Nahtstelle von Spritzgießkörpern benutzt, bei deren Herstellung die Schmelze von zwei Seiten unter Bildung einer Fließnaht zugeführt wurde (Verarbeitungstemperatur: 280° C, Abmessungen 170 x 10 x 4 mm³).

Die erfindungsgemäßen Formmassen (Beispiele 2, 4, 6) zeigen gegenüber den Vergleichsversuchen (Beispiele 1, 3, 5) bei jeweils gleichem Verhältnis von Polyethersulfon zu Polyethylenterephthalat deutlich höhere Fließnahtfestigkeit (an F) und stark verbesserte Kerbschlagzähigkeit ($a_k$ bei 20° C).

| Zusammensetzung und Eigenschaften der Formmassen | | | | | |
|---|---|---|---|---|---|
| Beispiele | Komponenten | | | $a_k$ bei 20° C [kJ/m²] | an F [kJ/m²] |
| | A | B | C | | |
| | Gew.-% | | | | |
| 1 (Vergleich)* | 62 | 37,5 | - | 3,6 | 1,9 |
| 2 | 50 | 30 | 20 | 11,2 | 4,9 |
| 3 (Vergleich)* | 75 | 25 | - | 4,3 | 2,1 |
| 4 | 60 | 20 | 20 | 23,7 | 4,7 |
| 5 (Vergleich)* | 87,5 | 12,5 | - | 5,8 | 2,2 |
| 6 | 70 | 10 | 20 | 84,0 | 4,2 |

**Ansprüche**

1. Thermoplastische Formmassen aus
   A. 5 bis 99 Gew.-Teilen eines aromatischen Polyethersulfons
   B. 1 bis 90 Gew.-Teilen eines thermoplastischen Polyalkylenterephthalats und
   C. 1 bis 60 Gew.-Teilen eines Pfropfpolymerisats, von

C.1 5 bis 90 Gew.-Teilen einer Mischung aus

C.1.1 20 bis 99 Gew.-Teilen Methylmethacrylat und

C.1.2 1 bis 40 Gew.-Teilen Acrylsäureester eines primären oder sekundären einwertigen aliphatischen $C_2$-$C_{10}$-Alkohols und gegebenenfalls

C.1.3 0,1 bis 10 Gew.-Teilen Acryl- oder Methacrylsäureester des tert.-Butanols und/oder gegebenenfalls

C.1.4 0,1 bis 30 Gew.-Teilen einer Mischung aus 50 bis 95 Gew.-Teilen Styrol, α-Methylstyrol, $C_1$-$C_4$-Alkyl- oder Halogen-kernsubstitiertem Styrol oder Mischungen daraus und 5 bis 50 Gew.-Teilen Acrylnitril, Methacrylnitril, Maleinsäureanhydrid, $C_1$-$C_4$-Alkyl-, Phenyl-N-substituiertem Maleinimid oder Mischungen daraus, auf

C.2 10 bis 95 Gew.-Teile eines vernetzten Dien-oder Acrylat-Kautschuks mit einem mittleren Teilchendurchmesser $d_{50}$ von 0,05 bis 1 µm und einem Gelgehalt von mehr als 50 Gew.-%.

2. Formmassen nach Anspruch 1, enthaltend Stabilisatoren, Pigmente, Entformungsmittel, Flammschutzmittel und/oder Antistatika.

3. Verfahren zur Herstellung der Formmassen des Anspruchs 1, dadurch gekennzeichnet, daß man A, B und C gegebenenfalls Stabilisatoren, Pigmente, Entformungsmittel, Flammschutzmittel und/oder Antistatika vermischt und bei 200 bis 350 °C in üblichen Vorrichtungen schmelzcompoundiert oder schmelzextrudiert.

4. Verwendung der Formmassen des Anspruchs 1 zur Herstellung von Formkörpern.